# EUROPÄISCHE PATENTSCHRIFT

(11) **EP 1 373 057 B1**
(45) Veröffentlichungstag und Bekanntmachung des Hinweises auf die Patenterteilung: **08.12.2004**
(21) Anmeldenummer: 02726172.6
(22) Anmeldetag: 14.03.2002
(51) Int. Cl.: B62J 7/04

(54) **FAHRRAD MIT GEPÄCKTRÄGER**
BICYCLE WITH LUGGAGE RACK
BICYCLETTE AVEC PORTE-BAGAGES

(30) Priorität: 27.03.2001 DE 20105358 U
(43) Veröffentlichungstag der Anmeldung: 02.01.2004
(73) Patentinhaber: Canyon Bicycles GmbH, 56073 Koblenz (DE)
(72) Erfinder: SCHEFFER, Lutz, 79211 Denzlingen (DE); ARNOLD, Roman, 56068 Koblenz (DE)
(74) Vertreter: von Kirschbaum, Alexander, Dipl.-Ing.
(86) Internationale Anmeldenummer: PCT/EP2002/002818
(87) Internationale Veröffentlichungsnummer: WO 2002/076812

(56) Entgegenhaltungen:
- EP-A- 0 832 810
- EP-A- 1 069 034
- WO-A-00/24628
- GB-A- 201 618

## Beschreibung

Die Erfindung bezieht sich auf ein Fahrrad mit einem Gepäckträger.

Bei bekannten Fahrrädern ist in der Regel eine Federung vorgesehen, die den Fahrradfahrer gegen durch Fahrbahnunebenheiten erzeugte vertikale Stöße abfedert. Diese Federung kann im Bereich der Sitzstütze oder des Sitzes angeordnet sein, kann jedoch auch in Form einer Rahmenfederung ausgebildet sein, d. h. in Form einer Hinterradfederung. Um einen guten Federungskomfort sicherzustellen, ist die Federung ungefähr auf das Gewicht des Fahrradfahrers abgestimmt. Der Gepäckträger ist häufig an einem ungefederten Teil des Fahrrades befestigt, so dass bei Mitführung von Gepäck die ungefederte Masse des Fahrrades erheblich vergrößert ist, was zu einer Verschlechterung des Federungskomforts führt. Ferner werden auch starke Erschütterungen ungefedert auf das ggf. empfindliche Gepäck übertragen. Der Gepäckträger kann jedoch auch an der gefederten Sitzstütze oder an dem gefederten Zentralrahmen des Fahrrades befestigt sein, d. h. mit einem gefederten Teil des Fahrrades starr verbunden sein. Bei Mitführung von Gepäck auf dem Gepäckträger wird dann das Gewicht des gefederten Teiles des Fahrrades erheblich vergrößert, so dass sich auch das Federungsverhalten der für das erhöhte Gewicht zu weichen Federung nachteilig verändert.

Aus EP 1 069 034 A1, von der im Oberbegriff des Patentanspruchs 1 ausgegangen wird, ist ein Fahrrad mit einem an einer Hinterradgabel gefedert befestigten Zentralrahmen bekannt. Der Gepäckträger ist mit seinem vorderen Anlenkpunkt an dem gefederten Zentralrahmen und mit einer Koppelstrebe an der ungefederten Hinterradgabel befestigt. Hierdurch werden die durch die Gepäckträgerlast verursachten Kräfte sowohl in den gefederten Zentralrahmen als auch in die ungefederte Hinterradgabel eingeleitet.

Aus GB 201 618 A und aus EP 0 832 810 A1 sind Fahrräder bekannt, die . jeweils einen ungefederten Rahmen aufweisen, an dem jeweils ein Gepäckträger mit seinem vorderen Ende drehbar und mit seinem hinteren Ende gefedert befestigt ist.

Aufgabe der Erfindung ist es daher, die Federung eines Fahrrades mit Gepäckträger zu verbessern.

Diese Aufgabe wird erfindungsgemäß mit den Merkmalen des Anspruchs 1 gelöst.

Bei dem erfindungsgemäßen Fahrrad ist der Gepäckträger vertikal beweglich an einem ungefederten Teil einer Radgabel mit einem vertikal wirkenden Federungselement befestigt. Durch die Befestigung des Gepäckträgers ausschließlich an einem ungefederten Teil einer Radgabel wird bei einem gefederten Fahrradrahmen die gefederte Masse des Fahrradzentralrahmens bzw. des Sattels nicht verändert, unabhängig davon, ob auf dem Gepäckträger Gepäck mitgeführt wird. Die gefederte Masse des Fahrradzentralrahmens bzw. des Sattels bleibt also stets konstant bzw. verändert sich nur in Abhängigkeit vom Fahrergewicht. Zur Verbesserung des Federungskomforts und zur Vermeidung der Übertragung starker Stöße von der Fahrbahn auf den Gepäckträger bzw. auf das Gepäck ist der Gepäckträger gegenüber dem ungefederten Teil der Radgabel selbstständig gefedert. Das Fahrrad weist also zwei voneinander unabhängige Federungen auf, nämlich die Hauptfederung des Zentralrahmens einerseits und die Federung des Gepäckträgers gegenüber einem ungefederten Teil des Fahrrades andererseits. Die Hauptfederung bleibt auch bei beladenem Gepäckträger optimal auf das Fahrergewicht abgestimmt, und muss nicht an das Gepäckgewicht angepasst werden. Die vertikale Beweglichkeit des Gepäckträgers kann auch durch eine Drehlagerung des Gepäckträgers um einen vor oder hinter dem Gepäckträger liegenden Drehpunkt realisiert sein.

Die den Gepäckträger tragende Radgabel ist eine Hinterradgabel, die gefedert an dem Zentralrahmen befestigt ist. Bei der vorliegenden Rahmenfederung, d.h. bei der Federung der Hinterradgabel gegenüber dem Zentralrahmen, ist der gefederte Gepäckträger an dem ungefederten Teil der Hinterradgabel befestigt. Nur auf diese Weise kann eine weitgehend unabhängige Federung des Gepäckträgers von der des Zentralrahmens realisiert werden. Da die beiden gefederten Massen, nämlich die Masse des gefederten Zentralrahmens mit dem Fahrradfahrer und die Masse des gefederten Gepäckträgers, nicht in einer Reihe hintereinanderliegend, sondern parallel zueinander und unabhängig voneinander gefedert sind, wird vermieden, dass sich die Federungsbewegungen der gefederten Teile, d. h. die des Zentralrahmens und die des Gepäckträgers, gegenseitig aufschaukeln können.

Gemäß einer bevorzugten Ausgestaltung ist das vordere Ende des Gepäckträgers mit einem Drehgelenk an der Hinterradgabel befestigt. Der Gepäckträger sollte gegenüber dem ungefederten Teil der Hinterradgabel möglichst vertikal beweglich geführt sein. Dies ist jedoch nur mit relativ großem Aufwand realisierbar. Sinnvoll und einfach realisierbar ist die Lagerung des Gepäckträgers mittels eines Drehgelenkes an der Hinterradgabel. Der Drehpunkt, d. h. das Drehgelenk sollte möglichst weit entfernt von der Hinterradachse angeordnet sein. Dadurch wird der Gepäckträger auf einem weiten Bogen über der Hinterradachse geführt, d. h., er vollzieht über einen kleinen Drehwinkel eine annähernd vertikale Bewegung oberhalb der Hinterachse des Hinterrades.

Vorzugsweise ist das Federungselement an einem hinterachsnahen Teil der Hinterradgabei angeordnet. Das Federungselement ist idealerweise ungefähr vertikal oberhalb der Hinterachse angeordnet. Hierdurch wird ein kurzhebeliges Einleiten und übertragen der auftretenden Vertikalkräfte bewirkt und die Gefahr des Verbiegens oder Brechens der Hinterradgabel vermieden.

Gemäß einer bevorzugten Ausgestaltung sind das Drehgelenk und das Federungselement derart angeordnet, dass die Federungsachse des Federungselementes annähernd senkrecht zu der betreffenden Drehgelenkradialen verläuft. Hierdurch wird sichergestellt, dass die Federungselementlängsachse und die kreisförmige Bewegungsrichtung des Gepäckträgers sich in diesem Ort ungefähr decken, so dass ein lineares und gutes Federungsverhalten sichergestellt wird.

Vorzugsweise ist an dem vorderen Ende des Gepäckträgers ein Gepäckträgerarm vorgesehen, der an dem Drehgelenk befestigt. ist. Hierdurch wird der Radius, auf dem sich der Gepäckträger um das Drehgelenk bewegt, vergrößert. Auf diese Weise kann eine annähernd vertikale Bewegung des Gepäckträgers über einen kleinen Drehwinkel und eine annähernd vertikale Federungsrichtung realisiert werden.

Gemäß einer bevorzugten Ausgestaltung liegt der Schwerpunkt des Gepäckträgers annähernd vertikal über der Hinterradachse. Durch die Anordnung des Gepäckträgerschwerpunktes und damit auch des Gepäckschwerpunktes ungefähr vertikal über der Hinterradachse wird die Erzeugung von auf den Gepäckträger wirkenden Kippmomenten vermieden.

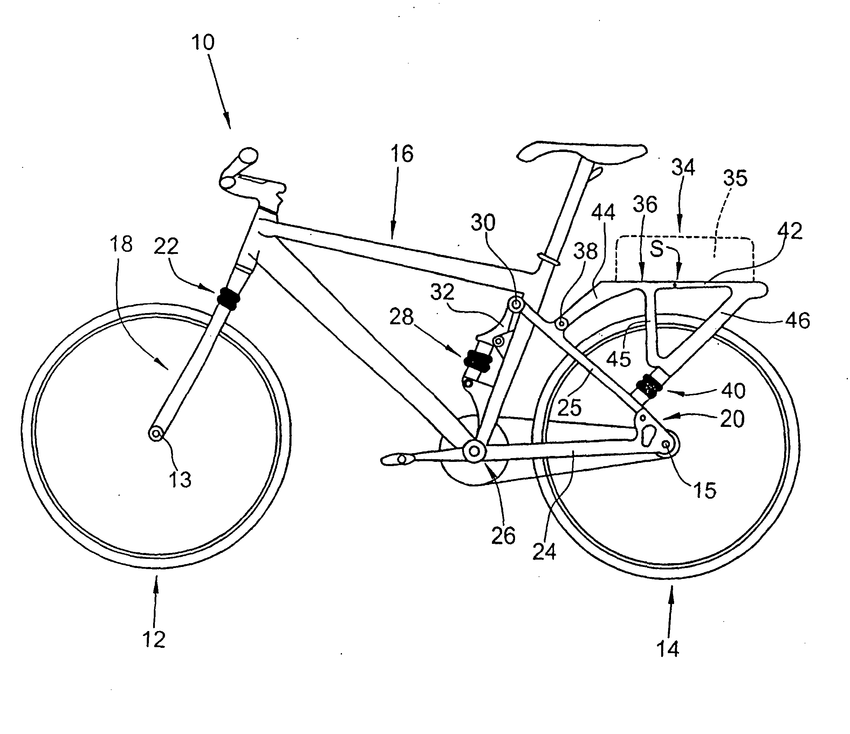

Im Folgenden wird unter Bezugnahme auf die Zeichnung ein Ausführungsbeispiel der Erfindung näher erläutert.

Die Figur zeigt ein Fahrrad mit einem gefederten Zentralrahmen und einem gefederten Gepäckträger.

In der Figur ist ein Fahrrad 10 dargestellt, das als geländegängiges Fahrrad ausgebildet ist. Zur Abfederung von Fahrbahnunebenheiten ist das Fahrrad 10 voll gefedert, d. h. ein Zentralrahmen 16 ist gegenüber einem Vorderrad 12 und einem Hinterrad 14 gefedert befestigt.

Der Zentralrahmen 16 ist durch eine Teleskopfederung 22 federnd mit der Vorderradgabel 18 verbunden. Eine Hinterradgabel 20 besteht aus einer gegabelten Hinterradschwinge 24, die mit einem Tretlager-Drehgelenk 26 drehbar an einem Tretlager befestigt ist. Femer weist die Hinterradgabel 20 an jeder Fahrradseite jeweils eine stangenartige Hinterradgabel-Stütze 25 auf, gegenüber der der Zentralrahmen 16 durch eine Hinterradgabel-Federungsvorrichtung 28 in ihrer axialen Richtung gefedert ist. Die zentralrahmenseitigen Enden der beiden Hinterradgabel-Stützen 25 sind mit einem Umlenker 32 verbunden, der seinerseits an einem Umlenkergelenk 30 drehbar an dem Zentralrahmen 16 befestigt ist. Der Umlenker 32 ist mit einem Federungselement gegen den Zentralrahmen 16 abgefedert.

Das Fahrrad 10 weist einen Gepäckträger 34 auf, der an der ungefederten Hinterradgabel 20 befestigt ist. Der Gepäckträger 34 ist an der ungefederten Hinterradgabel 20 nicht starr, sondern beweglich und gefedert an der Hinterradgabel 20 nach Art einer Schwinge befestigt.

Der Gepäckträger 34 wird im Wesentlichen gebildet von einem Gepäckträgerrahmen 36, der auf beiden Hinterradgabel-Stützen 25 mit seinem vorderen Ende mit einem Drehgelenk 38 und mit seinem beiden seitlichen unteren Enden jeweils mit einem Federungselement 40 befestigt ist. Der Gepäckträgerrahmen 36 setzt sich einstückig zusammen aus der Gepäckträger-Grundplatte 42, aus einem Gepäckträgerarm 44 am vorderen Ende der Grundplatte 42 und aus jeweils zwei zusammen mit der Grundplatte 42 ein geschlossenes Dreieck bildenden Stützstreben 45,46. Die unteren Spitzen der Stützstreben-Dreiecke bilden die mit den Federungselementen 40 verbundenen unteren Enden des Gepäckträgers 34. Der Gepäckträgerrahmen 36 ist einstückig aus Leichtmetall gefertigt.

Das Federungselement 40 besteht jeweils aus einem massiven gummielastischen Federungskörper, kann jedoch auch aus einer Stahlfeder und einem Dämpfungselement oder einem Luft- oder Gasdruckdämpfer bestehen.

Das Gepäckträger-Drehgelenk 38 ist möglichst weit entfernt von der Hinterradachse 15 im fahrradvorderseitigen Teil der Stützen 25 angeordnet. Hieraus ergibt sich ein möglichst großer Drehkreis des Gepäckträgers 34, der daher in einem kleinen Drehwinkelintervall eine annähernd vertikale Bewegung ausführt.

Der Schwerpunkt S des Gepäckträgers 34 mit aufgeladenem Gepäck 35 von ca. 10 kg liegt ungefähr vertikal über der Hinterradachse 15. Hierdurch wird sichergestellt, dass bei vertikalen Stößen praktisch keine Drehmomente durch den Gepäckträger 34 und das Gepäck 35 auf die Hinterradgabel 20 wirken.

Die Längs- und Wirkungsachse des Federungselementes 40 liegt ungefähr rechtwinklig zu der betreffenden Drehgelenkradialen des Drehgelenkes 38, d. h. ungefähr senkrecht zu der Hinterradgabel-Stütze 25. Hierdurch wirkt das Federungselement 40 genau in der Bewegungsrichtung des unteren Endes der Stützstreben 45,46, so dass ein lineares Federungsverhalten sichergestellt ist.

Die Vorderradachse 13, das Gepäckträger-Drehgelenk 38 und der Schwerpunkt S des mit Gepäck 35 beladenen Gepäckträgers 34 liegen ungefähr in einer Linie. Wie Versuche ergeben haben, wird hierdurch ein besonders gutes Federungsverhalten erzielt.

Das Federungselement 40 ist möglichst nahe der Hinterradachse 15 angeordnet, und idealer Weise mit seiner Federungslängsachse genau auf diese ausgerichtet. Hierdurch werden von dem Gepäckträger 34 bzw. den Federungselementen 40 nur geringe oder keine Biegekräfte auf die hohen Druckkräften ausgesetzten Hinterradgabel-Stützen 25 aufgebracht, so dass diese geschont werden und ein Bruch der Hinterradgabel-Stützen 25 auch bei hohen Gepäckgewichten vermieden wird.

Mit dem an einem ungefederten Fahrradteil befestigten und demgegenüber gefederten Gepäckträger wird der Einfluss des Gepäckgewichtes auf das Federungs- und Fahrverhalten des Fahrrades auf ein unvermeidbares Minimum reduziert.

## Patentansprüche

1. Fahrrad mit einem Gepäckträger (34) und einer Hinterradgabel (20), die gefedert an einem Fahrrad-Zentralrahmen (16) befestigt ist und einen ungefederten Teil (24,25) aufweist,
**dadurch gekennzeichnet,**
**dass** der Gepäckträger (34) im Wesentlichen vertikal beweglich an dem ungefederten Teil (25) der Hinterradgabel (20) mit einem Federungselement (40) befestigt ist.

2. Fahrrad nach Anspruch 1, **dadurch gekennzeichnet, dass** das vordere Ende des Gepäckträgers (34) mit einem Drehgelenk (38) an der Hinterradgabel (20) befestigt ist.

3. Fahrrad nach Anspruch 1 oder 2, **dadurch gekennzeichnet, dass** das Federungselement (40) am hinterachsnahen Teil der Hinterradgabel (20) angeordnet ist.

4. Fahrrad nach Anspruch 2 oder den Ansprüchen 2 und 3, **dadurch gekennzeichnet, dass** das Drehgelenk (38) und das Federungselement (40) derart angeordnet sind, dass die Federachse des Federungselementes (40) annähernd senkrecht zu der Drehgelenkradialen verläuft.

5. Fahrrad nach Anspruch 2 oder 4, oder den Ansprüchen 2 und 3, **dadurch gekennzeichnet, dass** an dem vorderen Ende des Gepäckträgers (34) ein Gepäckträgerarm (44) vorgesehen ist, dessen Ende an dem Drehgelenk (38) befestigt ist.

6. Fahrrad nach einem der Ansprüche 1 bis 5, **dadurch gekennzeichnet, dass** der Schwerpunkt (S) des Gepäckträgers (34) annähernd vertikal über der Hinterradachse (15) liegt.

## Claims

1. Bicycle with a luggage rack (34) and a rear wheel fork (20) that is spring-mounted to a bicycle central frame (16) and comprises a non-resilient part (24, 25),
**characterized in that**
through a suspension element (40), the luggage rack (34) is mounted to the non-resilient part (25) of the rear wheel fork (20) so as to be substantially vertically movable.

2. Bicycle of claim 1, wherein the front end of the luggage rack (34) is mounted to the rear wheel fork (20) through a hinge (38).

3. Bicycle of claim 1 or 2, wherein the suspension element (40) is arranged at the portion of the rear wheel fork (20) close to the rear axle.

4. Bicycle of claim 2 or claims 2 and 3, wherein the hinge (38) and the suspension element (40) are arranged such that the spring axis of the suspension element (40) extends almost perpendicular to the radial line of the hinge.

5. Bicycle of claim 2 or 4, or claims 2 and 3, wherein the front end of the luggage rack (34) is provided with a luggage rack arm (44) whose end is mounted to the hinge (38).

6. Bicycle of one of claims 1 to 5, wherein the centre of gravity (S) of the luggage rack (34) is situated almost vertically above the rear wheel axle (15).

## Revendications

1. Bicyclette avec un porte-bagages (34) et une fourche arrière (20), qui est fixée de manière suspendue à un cadre central de bicyclette (16), et qui présente une partie (24, 25) non suspendue, **caractérisée en ce que** le porte-bagages (34) est fixé de manière mobile, essentiellement verticalement, à la partie non suspendue (25) de la fourche arrière (20) avec un élément de suspension (40).

2. Bicyclette selon la revendication 1, **caractérisée en ce que** l'extrémité avant du porte-bagages (34) est fixée à la fourche arrière (20) avec une articulation pivotante (38).

3. Bicyclette selon la revendication 1 ou 2, **caractérisée en ce que** l'élément de suspension (40) est disposé sur la partie proche de l'axe arrière de la fourche arrière (20).

4. Bicyclette selon la revendication 2 ou selon les revendications 2 et 3, **caractérisée en ce que** l'articulation pivotante (38) et l'élément de suspension (40) sont disposés de telle sorte que l'axe du ressort de l'élément de suspension (40) passe pratiquement perpendiculairement à la radiale de l'articulation pivotante.

5. Bicyclette selon la revendication 2 ou 4, ou selon les revendications 2 et 3, **caractérisée en ce qu'**un bras de porte-bagages (44) est prévu à l'extrémité avant du porte-bagages (34), dont l'extrémité est fixée à l'articulation pivotante (38).

6. Bicyclette selon l'une quelconque des revendications 1 à 5, **caractérisée en ce que** le centre de gravité (S) du porte-bagages (34) est pratiquement à la verticale au-dessus de l'axe de la roue arrière (15).
